# EUROPEAN PATENT SPECIFICATION

(11) **EP 1 356 861 B1**
(45) Date of publication and mention of the grant of the patent: **13.07.2005**
(21) Application number: 02252769.1
(22) Date of filing: 19.04.2002
(51) Int. Cl.: B01J 20/18

(54) **Adsorbent compound for use in insulated glass windows**
Adsorptionsmittel für Isolierglasfenstern
Adsorbants pour fenêtres de verre isolant

(43) Date of publication of application: 29.10.2003
(73) Proprietor: UOP LLC, Des Plaines, IL 60017 (US)
(72) Inventor: Dangieri, Thomas J., Des Plaines, Illinois 60017 (US); Greenlay, Nanette, Des Plaines, Illinois 60017 (US)
(74) Representative: Ellis-Jones, Patrick George Armine

(56) References cited:
- WO-A-96/37289
- DE-A- 2 849 898
- GB-A- 1 334 240
- US-A- 4 835 130
- US-A1- 2001 049 998

## Description

The present invention relates to improved insulated glass windows. The present invention also relates to a matrix incorporating the improved zeolite adsorbent compound. More particularly, the invention relates to the use of the improved zeolite adsorbent compound in insulated glass windows.

Zeolites are well-known adsorbents which have been used in insulated glass windows between the glass panes, either alone or within a matrix. Generally, the zeolites are disposed along the periphery of the space enclosed by the glass panes, and the zeolites adsorb water vapor from the space between the panes to prevent the formation of a fog between the panes. The zeolite functions as a molecular sieve having pores into which the material being adsorbed passes. The pores in the molecular sieve have apertures of a size sufficient to permit the molecules of the material being adsorbed to pass-through, but small enough to block materials not adsorbed. Such molecular sieve zeolites for use in insulated glass windows are disclosed in US-A-4151690, US-A-4141186 and US-A-4144196.

Zeolites are known to have pore sizes ranging between 3 and 10 angstroms. Insulating glass windows generally consist of two panes of glass separated by an air space. Generally, the zeolites are placed in a channel along the perimeter of the window pane, or incorporated in a matrix around the parameter. The matrix typically comprises a polymer well-known in the art and into which the activated zeolite is bound. Zeolites with pore sizes greater than 3, are typically used to adsorb gaseous components in the air space. These gaseous components which can be adsorbed by such zeolites include oxygen and nitrogen, as well as water and organic vapors. When the temperature rises or the pressure lowers, the oxygen and nitrogen are released from the zeolite adsorbent. This phenomenon is known as out-gassing. When these zeolites are used in a matrix between the glass panes of a window, they adsorb oxygen and nitrogen when cooled (as during the evening hours) and then release the gases when the glass is heated (as during the daytime hours). This adsorption and desorption of gases can result in pressure variations in the enclosed air space between the glass panes. Such fluctuation can lead to window problems such as excessive deflection or inflection, or window failures from excessive flexing of the seal surrounding the window edges. Such out-gassing can also lead to a loss of adhesion between the glass panes and the matrix when the matrix is cured. The loss of adhesion generally results from the formation of bubbles in the matrix which then migrate to the adhesive-to-glass surface when such gases are released by the adsorbent.

In addition to the above gases in the enclosed air space between the glass panes, there are traces of the solvent from the matrix or inserts within the panes of the window. Over the life of the window, the matrix or other internal components in the window release solvent molecules which are larger than can be accommodated by the small pore adsorbents. In an effort to capture this solvent and keep it from forming a cloud, or a "chemical fog", and to prevent the chemical fog from condensing on the glass panes, a larger pore zeolite selective for the adsorption of the solvent molecules is included in the adsorbent material in the matrix or in the desiccant material.

US-A-4141186 and US-A-4144196 attempt to solve this problem by using zeolite adsorbents with pore sizes of three angstroms or less in size so that oxygen and nitrogen molecules cannot enter into the pores, thus preventing the adsorption and desorption of these gases. In another patent, US-A-4151690, it is disclosed that zeolite adsorbents with larger pore sizes can be pre-treated by adsorption of a low molecular weight polar material to partially suppress the undesirable adsorption of the gases.

US-A-3868299 to Ulisch discloses the use of an adsorbent designed for use in multiple layer, or multi-layer, insulating glass windows comprising a small-pore zeolite in combination with a large-pore adsorbent and, optionally, a clay binder. Ulisch discloses that small-pore zeolites include sodium zeolite A, and large-pore adsorbents include faujasite, active carbon, silica gel, aluminum oxide and mixtures thereof. Kaolin, attapulgite, bentonite, waterglass, gellable silica sols and mixtures thereof are disclosed as suitable binders. Ulisch discloses that the adsorbent materials are prepared by methods known in the art as oil dropping, wherein a suspension of the adsorbent materials is stirred with an aqueous stable silica sol to form a free-flowing suspension which is subsequently introduced to a liquid immiscible with water to form droplets of the required size. The bead granulates formed are removed from the liquid as completely homogeneous bead granulates. The bead granulates are screened, dried, and dehydrated in hot air at 350°C. Bead granulates produced in this manner represent the most common beads for use in insulating glass windows and, typically, have bulk densities ranging from 0.640 gm/cc (40 lbs/ft³) to 0.960 gm/cc (60 lbs/ft³) and range in size from 10 to 40 mesh.

Others such as US-A-4835130 to Box disclose the preparation of adsorbents for use in multi-pane windows by providing a zeolite material having a mixture of at least two zeolites having a pore size of 4 angstroms and a zeolite having a pore size up to and including 10 angstroms, which has been out-gassed by heating the zeolite to drive out gases and water vapor. The zeolite material is covered with a fluid such as a paraffinic, naphthenic, or aromatic oil which is impervious to nitrogen or oxygen and the covered zeolitic material is incorporated into a sealant matrix such as butyl, resin, zinc oxide, carbon black, aromatic resin, and silane.

US-A-4476169 relates to an adsorbent material for multi-layer glazing wherein an adsorbent in the spacers consists of a granular zeolite having a core of synthetic zeolite with a clay binder wherein the core has more zeolite than the particle as a whole, and a shell of synthetic zeolite with a clay binder wherein the shell has more clay than in the particle as a whole, and of particles of activated carbon coated with synthetic latex.

Although combinations of small pore zeolite A and larger pore zeolites such as zeolite X have been used in insulated glass windows, the problem of out-gassing from the zeolite in the matrix which leads to the accelerated failure of the insulated glass window has not been resolved. Even though attempts have been made to maximize the amount of the small pore zeolite relative to the large pore zeolite, the problem of the large pore zeolite adsorbing air as well as solvent has not been resolved. When 13X zeolite is employed in the adsorbent mixture, the insulated window out-gassing problem often results.

It is an objective of the present invention to provide insulated glass windows comprising an adsorbent material which has a reduced capacity for adsorbing selected gases from air while retaining the capacity to prevent premature failure of insulated glass windows by release of solvent molecules.

The large pore zeolite material used in the invention has a reduced affinity for the adsorption of air when used in insulated glass windows.

It is an objective of the present invention to mitigate the out-gassing problem in insulated glass windows by reducing the amount of nitrogen adsorbed by the adsorption material using an improved zeolitic adsorbent.

### SUMMARY OF THE INVENTION

It was surprisingly discovered that the nitrogen adsorption capacity of a faujasite-type zeolite in insulated glass windows can be significantly reduced by low levels of ion-exchange of the FAU-type zeolite with cations selected from alkali metals, ammonium and quaternary amine cations, without significantly reducing the adsorption of solvents.

In accordance with the invention there is provided a window having a cavity, the cavity containing a composition comprising a FAU-type zeolite having a framework silica to alumina ratio of from 2.0 to 2.5; and containing at least 0.1 equivalent mole percent of cations selected from alkali metal, ammonium and quaternary amine cations. Preferably the FAU-type zeolite is obtainable by a method which comprises partial ion exchange. Preferably the cavity additionally comprises a zeolite A, such as zeolite 3A, zeolite 4A and zeolite 5A molecular sieves.

It was discovered that the nitrogen adsorption capacity of FAU zeolite, having a silica to alumina ratio of 2.0 to 2.5, and particularly an X zeolite can be significantly reduced by low levels of ion exchange with an alkali metal such as potassium, wherein low levels of ion-exchange means less than 75 equivalent mole percent exchanged. More particularly, the nitrogen adsorption capacity of the X zeolite was significantly reduced by ion-exchange with potassium at potassium levels comprising from 5 to 40 equivalent mole percent potassium.

Also disclosed is an adsorbent compound for use in matrix for the fabrication of insulated glass windows wherein the adsorbent compound comprises a zeolite A in combination with a FAU zeolite which has been partially ion-exchanged with a cation comprising an alkali metal, said faujasite having a framework silica-to-alumina ratio from 2.0 to 2.5 and containing from 0.1 to 75 equivalent mole percent of said cation.

There is also disclosed a process for using an adsorbent in insulated glass windows for the adsorption of water and solvent vapor wherein the adsorbent comprises a FAU zeolite having a framework silica to alumina ratio of from 2.0 to 2.5 and containing from 5 to 75 equivalent mole percent alkali metal cations selected from the group consisting of potassium, lithium, rubidium and cesium and having 25 to 95 mole percent sodium cations, the total cation equivalency contributed by the potassium and sodium being at least 90 percent. These FAU-type zeolites are obtainable by a method which comprises exchanging from 0.1 to 60 equivalent percent of available ion exchange sites with the alkali metals referred to above.

### DETAILED DESCRIPTION OF THE INVENTION

The adsorbent or adsorbents employed in insulating glass windows can be any of the naturally occurring of synthetically produced adsorbents which will selectively, on the basis of molecular size, adsorb water without adsorbing oxygen or nitrogen. Typically, zeolite A, zeolite X, and mixtures thereof have been used in insulating glass windows to prevent condensation. More particularly, zeolites 3A, 4A, and 13X are preferred zeolite materials.

Zeolitic molecular sieves in the calcined form may be represented by the general formula;

Me_{2/n}O : Al₂O₃ : xSiO₂

where Me is a cation, x has a value from 2 to infinity, and n is the cation valence. Typically well-known zeolites which may be used include FAU-type zeolites such as faujasite, Zeolite X, and Zeolite Y. Detailed descriptions of some of the above identified zeolites may be found in D. W. Breck, Zeolite Molecular Sieves, John Wiley and Sons, New York, 1974.

It is often desirable when using crystalline molecular sieves that the molecular sieve be agglomerated with a binder in order to ensure that the adsorbent will have suitable particle size and strength. There are a variety of synthetic and naturally occurring binder materials available such as metal oxides, clays, silicas, aluminas, silica-aluminas, silica-zirconias, silica-thorias, silica-berylias, silica-titanias, silica-alumina-thorias, silica-alumina-zirconias, mixtures of these and the like, clay binders such as attapulgite, kaolin, volclay, halloysite, sepiolite, palygorskite, kaolinite, bentonite, montmorillonite, illite, and mixtures thereof may be employed. Clay binders selected from the group consisting of attapulgite, kaolin, volclay, halloysite, and mixtures thereof are preferred. Attapulgite and halloysite are more preferred for use as a binder with the zeolite adsorbent material.

Agglomerate formation techniques employed for insulating glass windows have focused on producing a concentrated agglomerate which would meet the minimum standard set by the Insulating Glass Certification Council or other certifying agency and which pass the American Society of Testing Materials (ASTM) specifications E773 and E774. The minimum standard was established that the amount of desiccant per linear foot of edge be greater than or equal to the amount used in prototype tests which were based on filling one to four sides of a hollow window spacer of fixed size and perimeter. Typically, the standard size spacer is 0.63 cm (.25 inch) wide by 0.63 cm (.25 inch) deep and the prototype window is 35.6 cm (14 inches) by 50.8 cm (20 inches).

Type 3A molecular sieves admit and adsorb water molecules and exclude oxygen molecules and nitrogen molecules. Adsorbents for use in insulated glass windows to control condensation of water vapor and of hydrocarbons or organic sulfides on the interior surfaces of the panes are typically prepared by mixing Type 3A molecular sieve zeolite with either a silica gel adsorbent or a large pore molecular sieve. The alumina has a pore diameter sufficiently large enough to permit the adsorption of benzene molecules. Generally, the adsorbent mixtures contain a minimum of 80 percent by mole of a Type 3A molecular sieve zeolite and a minimum of 20 weight percent silica gel. For some solvent systems, zeolite 13X is substituted for the silica gel.

In the present invention, it was surprisingly discovered that low-levels of ion-exchanging of the 13X zeolite component of the adsorbent mixture significantly reduced the tendency of the 13X zeolite to adsorb nitrogen, while not impacting the ability of the 13X zeolite to adsorb hydrocarbons. It was found that even at ion-exchange levels as low as 5 mole percent with potassium, a significant reduction of the adsorption capacity for nitrogen occurred. Continuing to ion-exchange the 13X zeolite to levels up to at least 40 equivalent mole percent of the available ion-exchange sites normally occupied by sodium continued to produce reductions in the nitrogen capacity. Preferably, the 13X zeolite is ion-exchanged to between from 5 to 40 equivalent mole percent potassium, and more preferably, the 13X zeolite is ion-exchanged to between from 5 to 25 equivalent mole percent potassium. Referring to a zeolite X structure, it is believed that this low level of alkali metal ion exchange replaces the sodium ions in the site III position of the supercage of the faujasite structure as described in Breck, ibid., pages 92-97. When at least a portion of the site III sodium cations are replaced with alkali metal cations having a charge density less than that of sodium, the affinity for the adsorption of nitrogen is reduced. Preferably, the alkali metal is selected from the group consisting of potassium, rubidium, and cesium, and more preferably the alkali metal comprises potassium. Faujasite which has been ion-exchanged with organic cations such as ammonium and quaternary amines having similar low charge densities including ammonium, methyl amine, ethyl amine, and propyl amine as described in Table 7.7 on page 552 of Breck, ibid., should also be suitable for the present invention. Nitrogen adsorption capacity tests confirmed significant reductions in the nitrogen adsorption capacity for 13X zeolite adsorbent following low-level potassium ion-exchange where the range of potassium ion-exchange ranged from 5 to 40 equivalent mole percent potassium. The silica to alumina ratio of the FAU zeolite which is ion-exchanged with the cations disclosed above will range from 2.0 to 2.5.

### EXAMPLES

The present invention is illustrated and exemplified by the data shown in tabular form in Tables 1-4. The following adsorbent compositions, the methods for their preparation, and the testing procedures were used in obtaining the ion-exchanged 13X zeolites and the nitrogen and solvent adsorption capacity.

### EXAMPLE I

Samples of zeolite 13X with varying degrees of potassium ion-exchange were prepared according to a batch exchange procedure. Approximately 10 gram samples of 13X zeolite adsorbent in powder form were immersed in a potassium chloride solution at 80° to 95°C with constant agitation. Typically, this operation lasted from 1 to 2 hours. The potassium exchange level was controlled by the quantity of zeolite and the potassium chloride used. To prepare the 5, 10 and 15 mole percent exchanged zeolite samples, a stoichiometric quantity of aqueous 0.02 molar potassium chloride solution was used and the filtrate was analyzed for sodium content to verify the amount of residual sodium on the zeolite. A 25 mole percent exchanged 13X zeolite sample was prepared with an aqueous 0.1 molar solution of potassium chloride. A 75 mole percent exchanged 13X zeolite sample was prepared by a 3 stage exchange with an 0.5 molar solution of potassium chloride.

Table I presents the observed nitrogen loading of the adsorbent measured in a conventional McBain Bakkr apparatus for an increasing degree of potassium ion-exchanged 13X zeolite having a silica to alumina ratio of 2.5. The adsorbent samples in the McBain Bakkr apparatus were activated in the conventional manner by raising the temperature to 350°C at vacuum conditions of less than 10⁻⁴ torr (0.13 kPa). The nitrogen loading of the unexchanged 13X zeolite was 0.969 weight percent. As the potassium ion exchange level was increased from 0 to 25 equivalent mole percent of the available ion exchange sites, the nitrogen loading, surprisingly decreased sharply from 0.969 to 0.172 weight percent. Thus, the partially ion-exchanged samples experienced a 600 percent decrease in nitrogen capacity, compared to the unexchanged zeolite 13X. The nitrogen capacities were determined at room temperature (21°C) and a pressure of 2370 kPa (700 mm Hg). At ion-exchange levels above 25 mole percent, nitrogen loading appeared to increase slightly as the ion exchange level of potassium approached 40 to 50 mole percent potassium. The nitrogen loading on the ion-exchanged material remained fairly constant as the level of potassium exchange increased toward 100 percent. These data demonstrate that zeolite 13X with potassium exchange levels of lower than 40 percent and above 5 mole percent potassium exchange can significantly reduce the nitrogen loading of the adsorbent in insulated glass windows.

**TABLE 1**

| Nitrogen Adsorption of Potassium Exchanged 13X Zeolite | | |
|---|---|---|
| Zeolite Sample Type | Mol-% K-ion Exchange | Nitrogen Loading, wt-% |
| 13X2.5 | 0 | 0.969 |
| NaKX2.5 | 8 | 0.440 |
| NaKX2.5 | 14 | 0.284 |
| NaKX2.5 | 21 | 0.242 |
| NaKX2.5 | 26 | 0.172 |
| NaKX2.5 | 75 | 0.509 |
| KX2.5 | 93 | 0.420 |

### COMPARATIVE EXAMPLE I

Samples of conventional materials were obtained and analyzed to determine how much air these materials adsorbed when cooled from room temperature (23 °C) to 0°C and how much air these materials desorbed when heated from 23° to 60°C. Approximately 3 gram samples of each of the commercial samples were first permitted to reach equilibrium at room temperature (23°C). The samples were placed in a 12 mm outside diameter by 75 mm long Pyrex glass test tube. The test tube was connected to a water manometer comprising two 25 cc burettes connected at their base and graduated with 0.1 cc graduations and filled with a sufficient amount of water so that the level reads 12.5 cc. The test tube was placed in fluid communication with the top of one of the burettes by connecting the test tube with the burette with a length of plastic tubing. The difference between the initial manometer reading and the reading after the adsorbent had reached the desired temperature was determined. The test tube was heated or cooled to the desired temperature and the volume loss or gain at atmospheric pressure for each sample was measured. The following samples were tested: (a) 4A zeolite powder, (b) 3A zeolite powder, (c) silica gel particles, and (d) a mixed window desiccant bead comprising 80 weight percent 3A zeolite and 20 weight percent 13X zeolite. The adsorption and desorption out-gassing per gram of adsorbent is shown in Table 2. The 4A zeolite powder (a) exhibited the highest adsorption of air at 2.0 cc/g and 3A zeolite (b) exhibited the least air adsorption at 0.11 cc/g.

**TABLE 2**

| Out-Gassing of Commercial Adsorbents | | |
|---|---|---|
| Zeolite Sample Type | Air Adsorption, 0°C | Air Desorption, 60°C |
| a | 1.98 | 2.44 |
| b | 0.11 | 0.67 |
| c | 0.44 | 0.59 |
| d | 0.55 | 0.70 |

### EXAMPLE II

The procedure of Comparative Example I was repeated for 13X zeolite powder and potassium exchanged 13X zeolite at potassium exchange levels of 10, 25 and 75 mole percent potassium exchanged. The results shown in Table 3 indicate the same sharp drop in air, or nitrogen adsorption, noted in Example I for a 13X zeolite which was ion-exchanged with low levels of potassium. These results indicate that the ion-exchange of 13X zeolite can effectively reduce the adsorption of air (or out-gassing) at levels of potassium ion-exchange between 5 and 75 equivalent mole percent by a factor of 200 percent over that of 13X zeolite which has not been ion-exchanged. The results of Example II using the above procedure appear to confirm the surprising reduction in nitrogen adsorption of Example I and extend the range of benefit for ion-exchange of a FAU zeolite or zeolite X up to 75 equivalent mole percent with an alkali metal cation.

**TABLE 3**

| Out-Gassing of Exchanged 13X Zeolite Adsorbents | | |
|---|---|---|
| Zeolite Sample Type | Air Adsorption, 0°C | Air Desorption, 60°C |
| 13X | 4.0 | 4.39 |
| 5 mol-%K | 2.0 | 2.18 |
| 10 mol-%K | 2.01 | 2.21 |
| 25 mol-%K | 2.08 | 2.20 |
| 75 mol-%K | 2.11 | 2.39 |

### EXAMPLE III

The ability of the potassium exchanged 13X zeolite to adsorb solvent was evaluated in the same manner as Example I. Samples of 13X zeolite and samples of 13X zeolite having been ion-exchanged with potassium at levels ranging from 5 mole percent potassium to 75 mole percent potassium were placed in a conventional McBain Bakkr apparatus. The adsorbent samples were activated in the McBain Bakkr apparatus in the conventional manner by raising the temperature to 350°C under vacuum conditions of 10⁻⁴ torr (0.13 kPa). The samples were then exposed to toluene vapor at a pressure of 7.6 torr (1.01 kPa). Table 4 presents the observed toluene loading of the adsorbent measured at ambient temperature for an increasing degree of potassium ion-exchanged 13X zeolite having a silica to alumina ratio of 2.5. The toluene loading of the non-exchanged 13X zeolite was 24.3 weight percent. The decrease in toluene adsorption capacity for a 5 mole percent potassium exchanged 13X compared to the non-exchanged 13X zeolite was less than 2 percent, and the decrease in toluene capacity for a 25 mole percent potassium exchanged 13X zeolite compared to the non-exchanged 13X zeolite was only 6.6 percent. Even at 75 percent potassium exchanged 13X zeolite, the decrease in toluene adsorption was only 16.5 percent less than non-exchanged 13X zeolite.

**TABLE 4**

| Toluene Adsorption of Potassium Exchanged 13X Zeolite | | |
|---|---|---|
| Zeolite Sample Type | Mol-% K-ion Exchange | Toluene Loading, wt-% |
| 13X2.5 | 0 | 24.3 |
| NaKX2.5 | 5 | 23.9 |
| NaKX2.5 | 10 | 23.6 |
| NaKX2.5 | 25 | 22.7 |
| NaKX2.5 | 75 | 20.3 |

## Claims

1. A window having a cavity, the cavity containing a composition comprising a FAU-type zeolite having a framework silica to alumina ratio of from 2.0 to 2.5; and containing at least 0.1 equivalent mole percent of cations selected from alkali metal, ammonium and quaternary amine cations.

2. A window according to claim 1, in which the FAU-type zeolite is obtainable by a method which comprises partial ion-exchange.

3. A window according to claim 1 or 2, in which the cavity additionally contains, and optionally the composition additionally comprises, a zeolite A.

4. A window according to claim 3, in which the zeolite A comprises one or more of zeolite 3A, zeolite 4A and zeolite 5A molecular sieves.

5. A window according to any preceding claim, in which the composition is within a matrix.

6. A window according to any preceding claim, in which the cations comprise one or more of potassium, lithium, rubidium and cesium.

7. A window according to any preceding claim, in which the FAU-type zeolite comprises one or more of faujasite, zeolite X and zeolite Y.

8. A window according to claim 7, in which the faujasite, zeolite X and/or zeolite Y is obtainable by a method which comprises exchanging from 0.1 to 60 equivalent mole percent of available ion exchange sites with said alkali metal.

9. A window according to claim 8, in which the faujasite, zeolite X and/or zeolite Y is obtainable by a method which comprises exchanging from 5 to 40 equivalent mole percent of available ion exchange sites with potassium ions.

10. A window according to claim 9, in which the zeolite X comprises zeolite 13X.

11. A window according to any preceding claim, in which the FAU-zeolite contains 0.1 to 75 equivalent mole percent of said cations.

12. A window according to claim 11, in which the FAU-zeolite is obtainable by a method which comprises introducing said cations by ion-exchange.

13. A window according to any of claims 1 to 10, in which the FAU-zeolite contains:
(a) 5 to 75 equivalent mole percent of one or more of potassium, lithium, rubidium, cesium, ammonium or quaternary amine ions; and
(b) 25 to 95 percent mole percent of sodium ions;
with the proviso that the total cation equivalency contributed by ions (a) and (b) is at least 90.

14. A window according to claim 13, in which the FAU-zeolite comprises zeolite 13X having from 5 to 25 equivalent mole percent of potassium ions and from 75 to 95 mole percent sodium ions.

## Patentansprüche

1. Fenster mit einem Hohlraum, wobei der Hohlraum eine Zusammensetzung enthält, umfassend einen FAU-Typ-Zeolit, welcher ein Netzwerk mit einem Siliziumdioxid- zu Aluminiumoxidverhältnis von 2,0 bis 2,5 aufweist, und mindestens 0,1 Mol-%-Äquivalente Kationen, ausgewählt aus Alkalimetall, Ammonium und quaternären Aminkationen, enthält.

2. Fenster nach Anspruch 1, in welchem der FAU-Typ Zeolit durch ein Verfahren, welches teilweise lonenaustausch umfaßt, erhältlich ist.

3. Fenster nach Anspruch 1 oder 2, in welchem der Hohlraum zusätzlich ein Zeolit A enthält, und gegebenenfalls die Zusammensetzung zusätzlich ein Zeolit A umfaßt.

4. Fenster nach Anspruch 3, in welchem der Zeolit A ein oder mehrere der Zeolit 3A, Zeolit 4A und Zeolit 5A Molekularsiebe umfaßt.

5. Fenster nach einem der vorangehenden Ansprüche, in welchem die Zusammensetzung innerhalb einer Matrix ist.

6. Fenster nach einem der vorangehenden Ansprüche, in welchem die Kationen eines oder mehrere aus Kalium, Lithium, Rubidium und Cäsium umfassen.

7. Fenster nach einem der vorangehenden Ansprüche, in welchem der FAU-Typ Zeolit eines oder mehrere aus Faujasit, Zeolit X und Zeolit Y umfaßt.

8. Fenster nach Anspruch 7, in welchem der Faujasit, Zeolit X und/oder Zeolit Y durch ein Verfahren erhältlich ist, welches das Austauschen von 0,1 bis 60 Mol-%-Äquivalente von verfügbaren lonenaustauschstellen mit dem Alkalimetall umfaßt.

9. Fenster nach Anspruch 8, in welchem der Faujasit, Zeolit X und/oder Zeolit Y durch ein Verfahren erhältlich ist, welches das Austauschen von 5 bis 40 Mol-%-Äquivalente an verfügbaren lonenaustauscherstellen mit Kaliumionen umfaßt.

10. Fenster nach Anspruch 9, in welchem der Zeolit X Zeolit 13X umfaßt.

11. Fenster nach einem der vorangehenden Ansprüche, in welchem der FAU-Zeolit 0,1 bis 75 Mol-%-Äquivalente Kationen enthält.

12. Fenster nach Anspruch 11, in welchem der FAU-Zeolit durch ein Verfahren erhältlich ist, welches das Einführen der Kationen durch lonenaustausch umfaßt.

13. Fenster nach einem der Ansprüche 1 bis 10, in welchem der FAU-Zeolit enthält:
a) 5 bis 75 Mol-%-Äquivalente eines oder mehrerer Kalium-, Lithium-, Rubidium-, Cäsium-, Ammonium- oder quaternärer Aminionen; und
(b) 25 bis 95 Mol-% von Natriumionen; mit der Maßgabe, daß die gesamte Kationenäquivalenz zu welcher die Ionen (a) und (b) beitragen mindestens 90 ist.

14. Fenster nach Anspruch 13, in welchem der FAU-Zeolit Zeolit 13X 5 bis 25 Mol-%-Äquivalente Kaliumionen und von 75 bis 95 Mol-% Natriumionen umfaßt.

## Revendications

1. Fenêtre ayant une cavité, la cavité contenant une composition comprenant une zéolite de type FAU ayant un rapport de squelette silice à alumine de 2,0 à 2,5 ; et contenant au moins 0,1 pour-cent d'équivalent molaire de cations choisis parmi des cations de métal alcalin, d'ammonium et d'amine quaternaire.

2. Fenêtre selon la revendication 1, dans laquelle la zéolite de type FAU est susceptible d'être obtenue par un procédé qui comprend un échange partiel d'ions.

3. Fenêtre selon la revendication 1 ou 2, dans laquelle la cavité contient en outre, et éventuellement la composition comprend en outre, une zéolite A.

4. Fenêtre selon la revendication 3, dans laquelle la zéolite A comprend un ou plusieurs des tamis moléculaires zéolite 3A, zéolite 4A et zéolite 5A.

5. Fenêtre selon l'une des revendications précédentes, dans laquelle la composition est à l'intérieur d'une matrice.

6. Fenêtre selon l'une des revendications précédentes, dans laquelle les cations comprennent un ou plusieurs du potassium, du lithium, du rubidium et du césium.

7. Fenêtre selon l'une des revendications précédentes, dans laquelle la zéolite de type FAU comprend une ou plusieurs de la faujasite, la zéolite X et la zéolite Y.

8. Fenêtre selon la revendication 7, dans laquelle la faujasite, la zéolite X et/ou la zéolite Y est susceptible d'être obtenue par un procédé qui comprend l'échange de 0,1 à 60 pour-cent d'équivalents molaires des sites d'échange d'ions disponibles par ledit métal alcalin.

9. Fenêtre selon la revendication 8, dans laquelle la faujasite, la zéolite X et/ou la zéolite Y est susceptible d'être obtenue par un procédé qui comprend l'échange de 5 à 40 pour-cent d'équivalents molaires des sites d'échange d'ions disponibles par des ions potassium.

10. Fenêtre selon la revendication 9, dans laquelle la zéolite X comprend la zéolite 13X.

11. Fenêtre selon l'une des revendications précédentes, dans laquelle la zéolite FAU contient 0,1 à 75 pour-cent d'équivalents molaires desdits cations.

12. Fenêtre selon la revendication 11, dans laquelle la zéolite FAU est susceptible d'être obtenue par un procédé qui comprend l'introduction desdits cations par échange d'ions.

13. Fenêtre selon l'une quelconque des revendications 1 à 10, dans laquelle la zéolite FAU contient :
(a) 5 à 75 pour-cent d'équivalents molaires d'un ou plusieurs des ions potassium, lithium, rubidium, césium, ammonium ou amine quaternaire ; et
(b) 25 à 95 pour-cent d'équivalents molaires d'ions sodium ;
à condition que l'équivalence totale des cations contribuée par les ions (a) et (b) soit au moins 90.

14. Fenêtre selon la revendication 13, dans laquelle la zéolite FAU comprend la zéolite 13X ayant de 5 à 25 pour-cent d'équivalents molaires d'ions potassium et de 75 à 95 pour-cent en moles d'ions sodium.
